# EUROPEAN PATENT APPLICATION

(11) **EP 2 574 223 A1**
(43) Date of publication of application: **03.04.2013**
(21) Application number: 11183326.5
(22) Date of filing: 29.09.2011
(51) Int. Cl.: A01C 1/00, A01C 1/02

(54) **A system for treating seeds, a method and a computer program product**

(71) Applicant: Rhino Research Europe B.V., 7122 JH Aalten (NL)
(72) Inventor: van Asbrouck, Johan Gaston Marie, 66000 Phichit (TH)
(74) Representative: Jansen, Cornelis Marinus

(57) **Abstract**

The invention relates to a system for treating seeds, comprising a chamber (3) provided with a seedbed (4) for supporting a layer (5) of the seeds (2), a dehumidifier (60) for dehumidifying a gas, and a gas transport circuit (8). The circuit includes a first circuit part (8a) and a second circuit part (8b), both circuit parts interconnecting the chamber (3) to the dehumidifier (60). Further, the circuit includes a pump (9) for pumping the gas through the circuit for subsequently transporting the gas via the chamber, the first circuit part, the dehumidifier and the second circuit part back to the chamber. The dehumidifier comprises a container (6) containing, during use, zeolite particles.

## Description

### FIELD OF THE INVENTION

The invention relates to a system for treating seeds.

Priming is a form of sow seed handling in which the seeds are prepared for planting or sowing the seeds, to prepare the germination process of the seeds.

### BACKGROUND OF THE INVENTION

Many of the current priming methods are directed to pre-soaking the seeds just before planting or sowing the seeds, to give the seeds a head-start over plants growing from not primed seeds. Usually, it is the sower who presoaks his seeds the day or the night before he will sow them. The head-start seems to help plants growing from the primed seeds to get a good root system faster than plants growing from seeds that have not been primed. Further, some methods have shown that it takes less time it takes for plants growing from the primed seeds to emerge from the soil, that the emergence rate is higher, and/or that plants emerge more uniformly than plants growing from non primed seeds. These differences are greatest under adverse environmental conditions in the field, such as during a drought or a cold.

In spite of the advantages of primed seeds over non primed seeds, priming methods are not extremely widely used. Common disadvantages of the primed seeds include much quicker loss of viability and shorter shelf life than non primed seeds. A further disadvantage of priming is for example the risk of fungous growth. Therefore, especially seed companies, e.g. fearing for the shorter shelf life and seed quality loss, are not widely using priming methods.

### SUMMARY OF THE INVENTION

It is an object of the present invention to provide a system for treating seeds wherein at least one of the disadvantages mentioned above is counteracted. More specifically, the invention aims at providing a system that can be used for the efficacious priming of seeds. In particular, the invention aims at providing a system for treating seeds that counteracts loss of viability of the seeds and/or the shortening of shelf life. Thereto, the system according to the invention comprises a chamber provided with a seedbed for supporting a layer of the seeds, a dehumidifier for dehumidifying a gas, and a gas transport circuit including a first circuit part and a second circuit part, both circuit parts interconnecting the chamber to the dehumidifier, wherein the circuit further includes a pump for pumping the gas through the circuit for subsequently transporting the gas via the chamber, the first circuit part, the dehumidifier and the second circuit part back to the chamber, wherein the dehumidifier comprises a container containing, during use, zeolite particles.

By dehumidifying the gas pumped around in the circuit the prepared seeds can be dehumidified immediately after being humidified to a predefined humidified level. As a result, the seeds can be dried shortly after humidifying the seeds to the required moisture level, and therefore, loss of viability of the seeds and/or the shortening of shelf life of the seeds is counteracted. Loss of viability of the seeds and/or the shortening of shelf life of the seeds is further counteracted by providing a container containing, during use, zeolite particles. Since zeolite is an extremely moisture absorbent material capable of quickly absorbing huge amounts of water, the gas can be dehumidified very quickly. As a result, the primed seeds can be dried faster than using conventional seed drying methods, such as drying seeds outside in the sunshine, blowing hot air over the seeds or providing less well dried air. Faster drying of the seed prevents excessive migration of liquids from a seed core to a skin of the seed during the drying, resulting in counteracting loss of viability of the seed and/or the shortening of shelf life of the seed.

Optionally, a sensor is provided for measuring the gas humidity, the gas temperature, the gas pressure, the gas composition and/or the gas flow rate. In advantageous ways, the gas humidity, the gas temperature, the gas pressure, the gas composition and/or the gas flow rate can be regulated, based on said measurements, thereby e.g. further improving the drying conditions in an elegant way.

In a specific embodiment according to the invention, a controlling step for regulating the gas humidity, the gas temperature, the gas pressure, the gas composition and/or the gas flow rate is based on measurement data that are exclusively obtained by a gas humidity sensor, thereby avoiding a need of applying a multiple number of sensor types that would generate measurement data that is of secondary importance for a priming process.

Since the migration of liquids from a seed core to a skin of the seed depends on multiple factors, including the internal parameters of a type of seed, the temperature of the seed, the relative humidity and the gas pressure, further counteracting loss of viability of the seed and/or the shortening of shelf life of the seed can be obtained by limiting the migration by regulating the rate of flow of the gas, the temperature of the gas, the humidity of the gas and/or the pressure of the gas.

The invention also relates to a method for treating seeds.

Further, the invention relates to a computer program product. A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet.

Further advantageous embodiments according to the invention are described in the following claims.

### DESCRIPTION OF THE DRAWINGS

By way of example only, embodiments of the present invention will now be described with reference to the accompanying figures, in which
Figure 1 shows a schematic view of a first embodiment of a system for treating seeds according to the invention;
Figure 2 shows a schematic view of a further embodiment of a system for treating seeds according to the invention;
Figure 3 shows a schematic view of yet a further embodiment of a system for treating seeds according to the invention; and
Figure 4 shows a flow chart of steps of a method for treating seeds according to the invention.

It is noted that the figures show merely preferred embodiments according to the invention. In the figures, the same reference numbers refer to equal or corresponding parts.

### DETAILED DESCRIPTION OF THE INVENTION

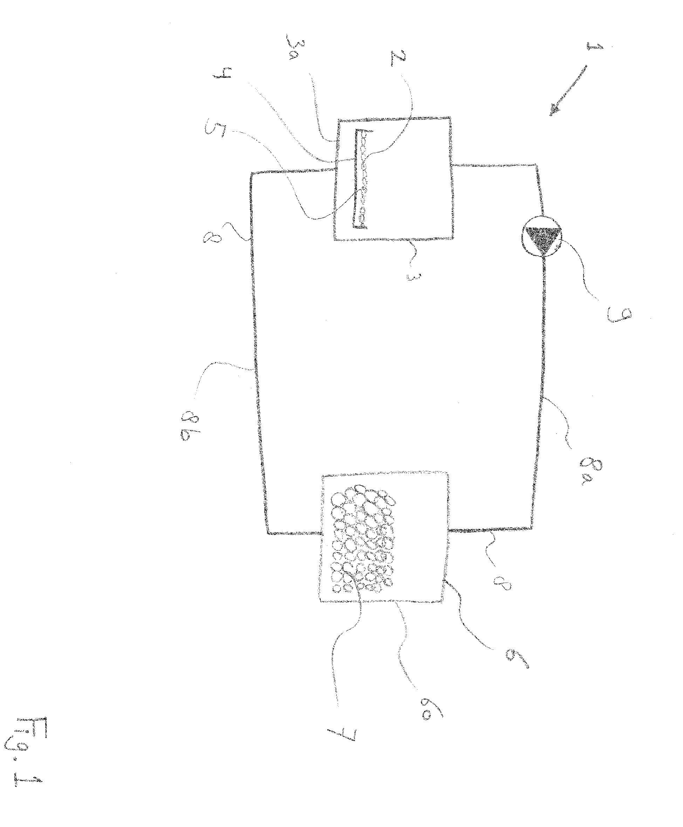

Figure 1 shows a schematic view of a first embodiment of a system for treating seeds according to the invention.

The term "seeds" refers to any live seed, e.g. live seeds that are used for the generation of progeny plants grown from the seeds when seeded, sowed or planted in or on a soil or suitable growth substratum. In fact, any seed can be used in the method of the invention. Particularly useful are seeds of wheat, oat, corn (mais), barley, rye, millet, rice, soy, rapeseed, linseed (flax), sunflower, carrot, black salsify, runner bean, goa bean, asparagus pea or winged bean, haricot bean, climbing bean or pole bean, snap bean, broad bean or field bean, garden pea or green pea, lupin, tomato, pepper, melon, pumpkin, cucumber, egg plant, zucchini, onion, leek, lettuce, endive, spinach, corn salad, gherkin, (red) cabbage, savoy cabbage, pointed cabbage, Chinese cabbage, pakchoi (bok choy), cauliflower, Brussels sprouts, sugar beet, beetroot, kohlrabi, chicory, artichoke, asparagus, broccoli, celeriac, celery, radish, grass and spices. Most preferably the seeds of soy and rice are used in aspects of the present invention.

The system 1 is suitable for use in a method 40 for priming seeds and may be a sowing seeds priming machine 1. As shown in Fig. 1, the system 1 comprises a chamber 3 provided with a seedbed 4 for supporting a layer 5 of the seeds 2, a dehumidifier 60 for dehumidifying a gas, and a gas transport circuit 8. The gas transport circuit includes a first circuit part 8a and a second circuit part 8b, both circuit parts 8a;8b interconnecting the chamber 3 to the dehumidifier 60. Further, the circuit 8 includes a pump 9 for pumping the gas through the circuit 8 for subsequently transporting the gas via the chamber 3, the first circuit part 8a, the dehumidifier 60 and the second circuit part 8b back to the chamber 3. The dehumidifier 60 comprises a container 6 which, during use of the system, contains zeolite particles 7. Further, the system 1 may include a humidifier 12 for humidifying the gas. The humidifier 12 is then arranged in the gas transport circuit 8.

The term "zeolite" refers to a family of micro-porous hydrated aluminosilicate minerals. More than 150 zeolite types have been synthesized and 48 naturally occurring zeolites are known. Zeolites have an "open" structure that can accommodate a wide variety of cations, such as Na+, K+, Ca2+, Mg2+ and others. These positive ions are rather loosely held and can readily be exchanged for others in a contact solution. Some of the more common mineral zeolites are: Amicite, Analcime, Barrerite, Bellbergite, Bikitaite, Boggsite, Brewsterite, Chabazite, Clinoptilolite, Cowlesite, Dachiardite, Edingtonite, Epistilbite, Erionite, Faujasite, Ferrierite, Garronite, Gismondine, Gmelinite, Gobbinsite, Gonnardite, Goosecreekite, Harmotome, Herschelite, Heulandite, Laumontite, Levyne, Maricopaite, Mazzite, Merlinoite, Mesolite, Montesommaite, Mordenite, Natrolite, Offretite, Paranatrolite, Paulingite, Pentasil, Perlialite, Phillipsite, Pollucite, Scolecite, Sodium Dachiardite, Stellerite, Stilbite, Tetranatrolite, Thomsonite, Tschernichite, Wairakite, Wellsite, Willhendersonite and Yugawaralite, all of which are equally suitable for use in the present invention. An example mineral formula is: Na₂Al₂Si₃O₁₀-2H₂O, the formula for natrolite. Naturally occurring zeolites are rarely pure and are contaminated to varying degrees by other minerals, metals, quartz or other zeolites. For this reason, naturally occurring zeolites are less preferred in many applications where uniformity and purity are essential, yet such impure zeolites are very suitable for the present application.

The term zeolite includes reference to zeolite granules, zeolite beads and zeolite particles. Example of commercially available zeolites are; Linde Type A (LTA), Linde Types X and Y (Al-rich and Si-rich FAU), Silicalite-1 and ZSM-5 (MFI), and Linde Type B (zeolite P) (GIS). Other commercially available synthetic zeolites include Beta (BEA), Linde Type F (EDI), Linde Type L (LTL), Linde Type W (MER), SSZ-32 (MTT), BRZ® (clinoptilolite). All are aluminosilicates. In the method of the present invention Linde type A zeolite (NaA, KA, CaA), also referred to by the three-letter code LTA (Linde Type A) zeolites, or the 3A, 4A and/or 5A type are preferably used.

The size of the zeolite particles as used herein is not particularly limited in aspects of the present invention.

In all cases zeolites can take up water from moisture or water vapour in a gas. Zeolites can hold up to 55% or more of their weight in water. By choosing the pore size of the zeolite such that the pores are e.g. about 4 ångström, the zeolite is not capable of absorbing other substances than water (H₂O).

The container 6, which during use contains the zeolite particles 7, may have a hatch or door for emptying the container 6, e.g. when the zeolite particles are saturated with water. Up to 100% of the removed saturated zeolite may be recycled. Hereto, the saturated zeolite may be heated up to above 200°C in order to allow the zeolite to exude the absorbed water. Further, the hatch or door can be used for putting fresh, non saturated zeolite particles in the container 6. Alternatively, the container 6 may be separable from the circuit and can be entirely replaced by another container containing fresh zeolite particles. The system 1 may have more than one container 6, e.g. 2, 3, 5, 10 or 25 containers. The several containers can for example form a series connection or may be parallel connected in the gas transport circuit 8. Likewise, this principle also applies to the chamber 3, since the system 1 may have more than one chamber 3 provided with a seedbed 4, e.g. 2, 3, 5, 10 or 25 chambers. The multiple number of chambers can for example be arranged in series or may be arranged in, and connected to the gas transport circuit 8. Further, a single or a multiple number of chambers 3 may each be provided with a multiple number of seedbeds, e.g. 2, 3, 5, 10 or 25 seedbeds 4 in a single chamber 3. The seedbed 4, which during use supports a layer 5 of seeds 2, may be fixedly connected with the chamber, but may alternatively be removable from the chamber, e.g. to allow an operator of the system 1 to remove the seedbed with the primed seeds 2. The seedbed may for example contain a seed carrier comprising wire gauze or a perforated plate. In another embodiment the seedbed 4 can be integrated in the chamber 3. As an example, the seedbed may be formed by the bottom 3a of the chamber. Advantageously the circulating gas lifts the seed from the seedbed, such that all sides of the floating seed neither contact another seed nor the seedbed, thereby providing that the gas can flow all around the seed.

The gas transport circuit 8 may comprise pipes and/or tubes. Further, the circuit may comprise gas passage ways, which e.g. are build in bricks. The circulated gas, optionally used for priming the seeds 2, may be air which may have moisture or water vapour in it. Alternatively the gas contains one single gas, such as e.g. Nitrogen (N₂), Oxygen (O₂) or Argon (Ar), or the gas can consist of a mixture of gasses.

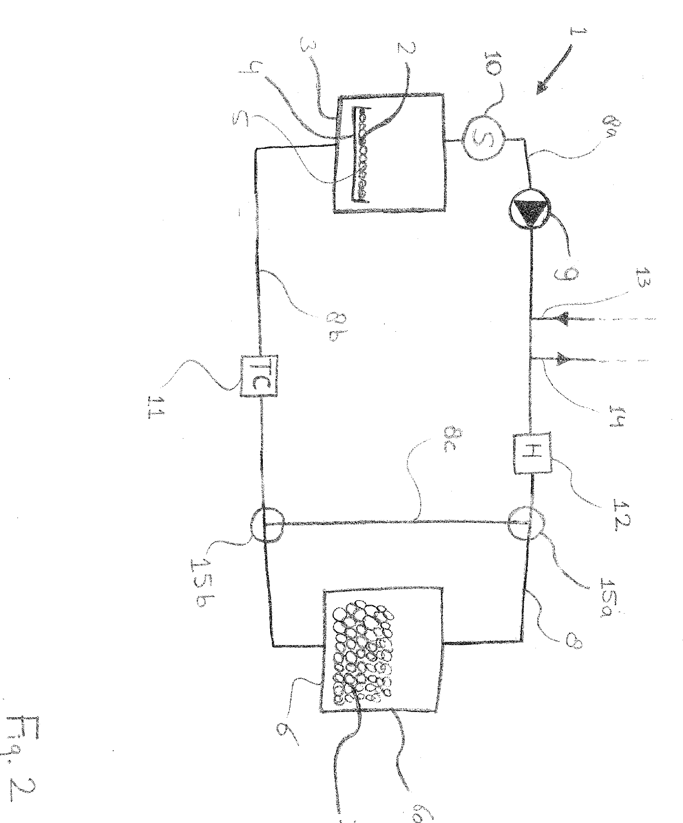

Figure 2 shows a schematic view of a further embodiment of a system for treating seeds according to the invention. In addition to system of the embodiments shown in Fig. 1, the system of the embodiment shown in Fig. 2 comprises a sensor 10 for measuring the gas humidity, the gas temperature, the gas pressure, the gas composition and/or the gas flow rate. Further, the system of the embodiment shown in Fig. 2 comprises a temperature conditioner 11 for conditioning the temperature of the gas, a gas inlet 13 for flowing a gas component into the system 1 and a gas outlet 14 for flowing the gas out of the system 1.

The system 1 further includes a humidifier 12 for humidifying the gas. The humidifier 12 is arranged in the transport circuit 8 so that circulating gas can be humidified.

As shown in Fig. 2, the gas transport circuit 8 comprises a first bypass circuit part 8c, linking the first circuit part 8a with the second circuit part 8b and bypassing the container 6, and comprises two valves 15a;15b for controlling a gas flow route. For example, a first valve 15a can be a three-way ball valve, which can allow the gas to flow through the container 6 in order to dehumidify the gas, when during a drying fase the seeds 2 have to be provided with e.g. dry or less wet air. Further, the first valve 15a can guide the gas or a part of the gas through the first bypass circuit part 8c if the gas or the part of the gas does not need or is not permitted to be dehumidified, for example during a seed humidifying phase of a priming process, when the gas supplied to the seeds needs to be moist.

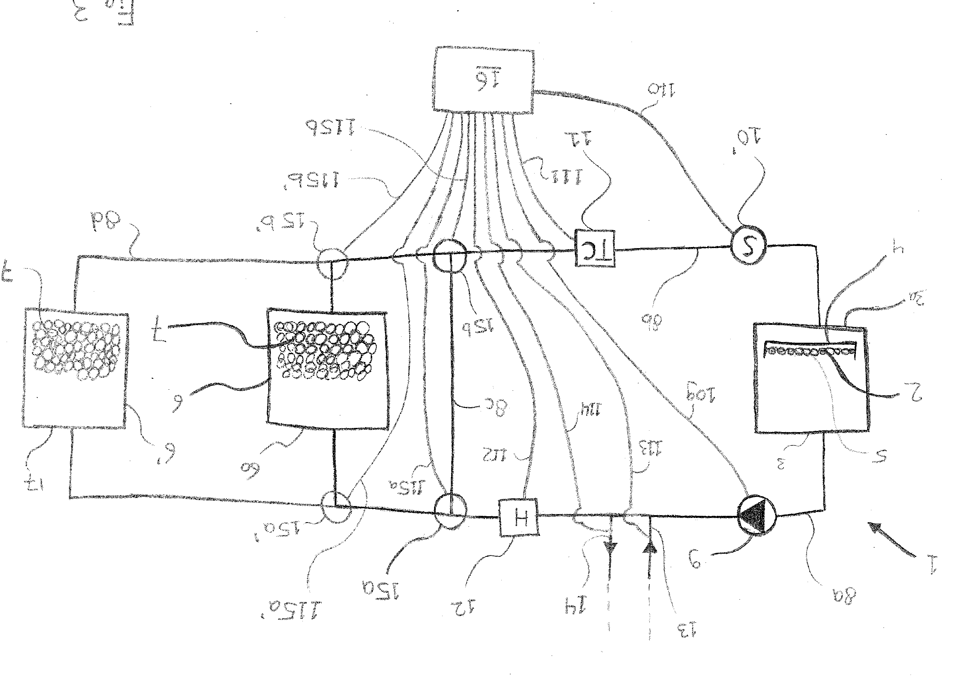

It is noted that the Fig. 2 show merely one embodiment and that each of the above disclosed additional features can all alone be implemented in the first embodiment, this applies, mutatis mutandis, to the further embodiments shown in Fig. 3. As an example, the embodiment shown in Fig. 1 can be supplemented with a temperature conditioner for conditioning the temperature of the gas. Besides, it is noted that each of the above disclosed additional features may be omitted from the embodiment shown in Fig. 2, which, mutatis mutandis, applies to the further embodiment of Fig. 3 as well. For example, Fig. 2 shows a temperature conditioner 11, however, the system 1 can alternatively lack a temperature conditioner 11, or, on the contrary, have 2, 3 or even more than 3 temperature conditioners.

The sensor 10 may comprise a hygrometer, for measuring the humidity of the gas, e.g. a psychrometer, a temperature sensor, e.g. a thermometer for sensing the temperature of the gas, a pressure gauge, e.g. a manometer for measuring the gas pressure and/or a sensor for measuring the flow rate of the gas, e.g. a turbine flow meter or an optical flow meter. Additionally or alternatively the sensor 10 may comprise a gas detector, for detecting components of the gas. In order to measure the composition of the gas, the gas detector can e.g. be provided with one or more electrochemical detectors, holographic detectors, infrared point detectors, semiconductor detectors and/or ultrasonic detectors.

Furthermore, the sensor 10 may additionally or alternatively comprise other types of sensors, e.g. a biosensor for detecting the level of germination or a sensor for sensing a physical aspect, such as swelling of a seed.

According to an embodiment of the invention, the sensor 10 is arranged in the first circuit part 8a, downstream to the chamber 3. When during a priming process the seeds 2 have to be provided with e.g. dry or less wet gas the circulating gas passes the downstream positioned sensor 10 and a humidity sensor can measure the moist level of the gas before the gas is pumped to the zeolite 7 in the container 6. Alternatively, the sensor, e.g. the humidity sensor, can be placed at a different part in the gas transport circuit 8, e.g. upstream to the chamber 3, as shown by the sensor 10' of Fig. 3, in order to check the gas conditions prior to providing the gas to the seeds 2 in the chamber 3. Further, multiple sensors may be provided at different places in the system, e.g. in order to measure conditions of the gas at different places in the system.

As described above, the system 1 may comprise a temperature conditioner 11 for conditioning the temperature of the gas. The temperature conditioner 11 may comprise a heater and/or a cooler. The system 1 may further comprise a humidifier 12 for humidifying the gas. The humidifier 12 may e.g. be a vaporizer. Alternatively, the humidifier 12 can be implemented as an ultrasonic humidifier, which creates water droplets containing impurities which are in water supplied to it. Therefore, the humidifier 12 may advantageously indirectly provide one or more substances to the seeds 2 during a priming process.

The gas outlet 14 and the gas inlet 13 may e.g. be used to remove wet air from the system and substitute it with dry air or vice versa. Further, the gas pressure can be controlled, e.g. for providing a pressure that is lower or higher than the atmospheric pressure. Since it may not be necessary to let gas in and/or out of the system 1 continuously, both the inlet 13 and the outlet 14 may each contain one or more valves. Further, the gas inlet 13 can be used to supply another gas or gas component to the system, e.g. Nitrogen (N₂), Oxygen (O₂) and/or Argon (Ar). Although the inlet and outlet are in the figures shown next to each other and are associated with the first circuit part 8a, the inlet 13 and outlet 14 may be positioned apart from each other and/or at different places in the system. For example, the inlet may be placed at the container 6 or at the second circuit part 8b.

Figure 3 shows a schematic view of yet a further embodiment of a system for treating seeds according to the invention. As disclosed above, the gas transport circuit 8 may comprise a first bypass circuit part 8c linking the first circuit part (8a) with the second circuit part 8b and bypassing the container 6. The gas transport circuit 8 may further comprise a second bypass circuit part 8d linking the first circuit part 8a with the second circuit part 8b and bypassing the container 6. Hereby, the second bypass circuit part 8d may comprise an additional dehumidifier 17 for dehumidifying gas. The additional dehumidifier 17 may comprise an alternative container 6' for containing zeolite particles 7', as shown in Fig. 3. However, the dehumidifier 17 may alternatively or additionally comprise other means for dehumidifying gas, such as e.g. a refrigerative dehumidifier, or another desiccant dehumidifier which, like the zeonite 7, works on the principle of absorption.

The dual dehumidifier approach can be exploited for recuperating zeolite particles contained in a first dehumidifier while the drying process is simultaneously performed by a second, operational dehumidifier. Further, a second dehumidifier can be in standby state in order to take over the dehumidifying process if large drying capacity is needed or if the first dehumidifier fails working.

It is noted that the gas transport circuit 8 may comprise more than two bypasses. For example, the circuit may also comprise a bypass bypassing the first bypass circuit part 8c, bypassing the container 6 and bypassing the alternative container 6'. Such additional bypasses may each comprise one or more dehumidifiers. Alternatively or additionally the circuit may comprise one or more bypasses bypassing one or more (other) elements of the system, e.g. bypassing the humidifier 12 or bypassing both the container 6 and the temperature conditioner 11.

In order to guide the gas to flow a particular route, the system 1 may further comprise one or more valves 15 for controlling the gas flow route. During the seed drying step of a priming process, the gas flow route may transport the gas from the chamber 3, through the container 6 back to the chamber 3. Alternatively, e.g. when the gas does not need or should not be dehumidified, the gas may be routed from the chamber, through the first bypass circuit part 8c back to the chamber. Additionally or alternatively, e.g. when the zeolite 7 in the container 6 is being replaced by fresh zeolite 7 during the drying process, the gas flow route may lead the gas from the chamber 3, through the additional dehumidifier 17 back to the chamber 3. Since the circuit 8 may comprise alternative and/or additional bypasses, the system may comprise corresponding alternative and/or additional valves. So although Fig. 3 shows 4 valves 15a;15a';15b;15b', the gas transport circuit 8 may contain another number of valves, e.g. 1, 3, 5, 10 or 20 valves. Besides, some valves, e.g. the valves 15a and 15a', may be integrated in one valve.

Moreover, the system 1 may comprise a processor 16 that is arranged for controlling at least one of the pump 9, the temperature conditioner 11, the humidifier 12, the gas inlet 13, the gas outlet 14 and the valve 15, for regulating the gas humidity, the gas temperature, the gas pressure, the gas composition, the gas flow rate and/or a gas flow route. The controlling may be based on data obtained by sensor measurements. The processor 16 may be directly or indirectly connected with a single or a multiple number of sensors 10; 10', e.g. using a wire 110 or a wireless connection. Based on the obtained data and other data, e.g. definite limiting values of gas conditions and/or a passing of certain amount of time, the processor 16 may control processes or process steps. Therefore, the processor 16 may be directly or indirectly connected with the pump 9, the temperature conditioner 11, the humidifier 12, the gas inlet 13, the gas outlet, the valve 15 and/or other elements of the system, e.g. by respective connections 109-115b'. Moreover, the operator of the system may supply the processor with extra input, or the operator may manually control one or more elements 9;11;12;13;14;15 of the system 1.

In a preferred embodiment according to the invention, the processor is arranged for performing the controlling step based on measurement data that are exclusively obtained by a gas humidity sensor.

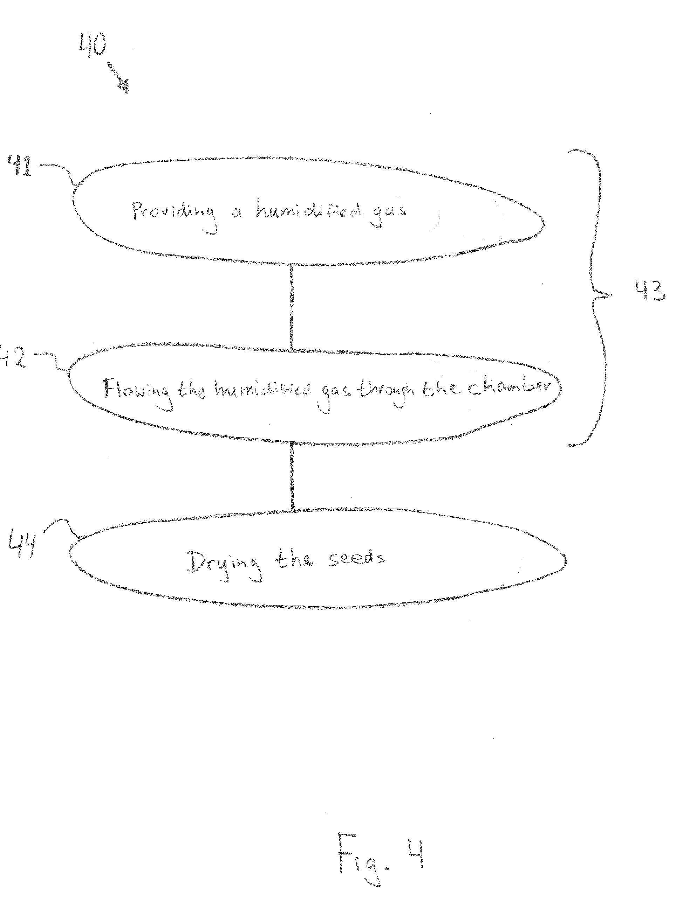

Figure 4 shows a flow chart of steps of a method for treatingseeds according to the invention. The method for treating seeds 40 comprises a step of drying the seeds 44. The drying step 44 is executed by pumping a gas through a gas transport circuit 8 including a first part 8a and a second part 8b, both parts interconnecting a chamber 3 provided with a seedbed 4 for supporting a layer 5 of the seeds, to a container 6 containing zeolite particles 7. The gas is pumped through the circuit in order to transport the gas via the chamber 3, the first circuit part 8a, the container 6 and the second circuit part 8b back to the chamber 3. When the gas passes the container 6, the gas exudes moisture to the absorbing zeolite. The process of the absorbed water reacting with the zeolite is an exothermic process. The generated warmth may be stored for later use, e.g. for heating the gas later on. For this purpose, the system may comprise a heat exchanger. Further, the extracted heat may be transported, e. g. to an interconnected second treating system.

Advantageously, the seedbed 4 supports during the treating process a single layer 5 of non-stacked seeds. However, the seedbed may contain multiple layers or a layer of piled seeds.

The method 40 further preferably comprises a step of humidifying the seeds 43 until a predefined humidity level is reached, prior to the step of drying the seeds 44. The step of humidifying the seeds 43 comprises the step of providing a humidified gas 41. Furthermore, the step of humidifying the seeds 43 comprises the step of flowing the humidified gas through the chamber 42.

Thus, by using the system according to the invention, seeds can be primed so that a faster and more homogenous germination process can be obtained.

In an embodiment, the method 40 comprises the step of measuring at least one of the humidity of the gas, the temperature of the gas, the pressure of the gas, the composition of the gas and the rate of flow of the gas. Furthermore, the method 40 then comprises also the step of regulating, based on data obtained by the measurements, a gas flow rate, the gas temperature, the gas humidity, the gas pressure, the gas composition and/or a gas flow route, by controlling a pump 9 for pumping the gas through the gas transport circuit 8, a temperature conditioner 11 for conditioning the temperature of the gas, a humidifier 12 for humidifying the gas, a gas inlet 13 for flowing a gas into the gas transport circuit 8, a gas outlet 14 for flowing the gas out of the gas transport circuit 8, and a valve 15 for controlling a gas flow route.

The migration of liquids from a seed core to a skin of the seed depends on multiple factors, including the internal parameters of a type of seed, the temperature of the seed, the relative humidity and the gas pressure. By regulating the rate of flow of the gas, the temperature of the gas, the humidity of the gas and the pressure of the gas the migration of the liquids from a seed core to a skin of the seed may be limited, resulting in counteracting loss of viability of the seed and/or the shortening of shelf life of the seed.

The measuring step and/or the regulating step for treating seeds can be executed using dedicated hardware structures, such as FPGA and/or ASIC components. Otherwise, the method can also at least partially be performed using a computer program product comprising instructions for causing a processor of a computer system or a control unit to perform the above described steps of the method according to the invention. All steps can in principle be performed on a single processor. However it is noted that at least one step can be performed on a separate processor, e.g. the regulating step. In an advantageous embodiment the valve 15 is capable of splitting the gas such that a first part of the gas flows for example through the container 6 and a second part of the gas flows for example through the first bypass circuit part 8c. Downstream of the place where the first circuit part 8c is linked to the second circuit part 8b both parts of the gas mix after coming together again. Therefore, the humidity of the gas downstream of that place can better be regulated and over-drying of the gas may be prevented.

The invention is not restricted to the embodiments described above. It will be understood that many variants are possible.

It is noted that the system according to the invention is also suitable for storing seeds under predefined conditions in terms of temperature, humidity, gas flow, gas composition of flowing gas, etc.

It is further noted that the system can be provided with a weighing sensor for weighing the weight of the dehumidifier 60, e.g. for controlling purposes. During operation of the dehumidifier 60 moisture is transported from the chamber 3 towards the dehumidifier 60 for accumulation. The accumulated moisture in the dehumidifier is therefore indicative of the reduction of moisture in the chamber. Thus, by measuring the weigh of the dehumidifier, the moisture reduction in the chamber is indirectly measured. Based on such weighing measurement, the system can be controlled. As an example, the flow of air induced in the gas transport circuit can be reduced or even stopped if a predetermined moisture reduction in the chamber is reached. The weighing data can also be used for monitoring the status of the dehumidifier. Again, as an example, if the moisture accumulation in the dehumidifier has exceeded a predetermined level or if the weight accumulation drops, the dehumidifier can be replaced by a fresh one since a saturation level of zeolite particles may have reached. If a multiple number of dehumidifiers are applied, e.g. an additional dehumidifier 17 as shown in Fig. 3, a number of dehumidifiers or even each dehumidifier can be provided with a weighing sensor for weighing the associated dehumidifier.

These and other embodiments will be apparent for the person skilled in the art and are considered to lie within the scope of invention as defined in the following claims.

## Claims

1. A system (1) for treating seeds (2), comprising a chamber (3) provided with a seedbed (4) for supporting a layer (5) of the seeds (2), a dehumidifier (60) for dehumidifying a gas, and a gas transport circuit (8) including a first circuit part (8a) and a second circuit part (8b), both circuit parts (8a;8b) interconnecting the chamber (3) to the dehumidifier (60), wherein the circuit (8) further includes a pump (9) for pumping the gas through the circuit (8) for subsequently transporting the gas via the chamber (3), the first circuit part (8a), the dehumidifier (60) and the second circuit part (8b) back to the chamber (3), wherein the dehumidifier (60) comprises a container (6) containing, during use, zeolite particles (7).

2. A system (1) according to claim 1, further comprising a sensor (10) for measuring the gas humidity, the gas temperature, the gas pressure, the gas composition and/or the gas flow rate.

3. A system (1) according to claim 2, wherein the sensor (10) is arranged in a first circuit part (8a), downstream to the chamber (3).

4. A system (1) according to any of the preceding claims, further comprising a temperature conditioner (11) for conditioning the temperature of the gas.

5. A system (1) according to any of the preceding claims, further comprising a gas inlet (13) for flowing a gas component into the system (1) and/or a gas outlet (14) for flowing gas out of the system (1).

6. A system (1) according to any of the preceding claims, the gas transport circuit (8) further comprising a first bypass circuit part (8c) linking the first circuit part (8a) with the second circuit part (8b) and bypassing the container (6).

7. A system (1) according to claim 6, the gas transport circuit (8) further comprising a second bypass circuit part (8d) linking the first circuit part (8a) to the second circuit part (8b) and bypassing the container (6), the second bypass circuit part (8d) comprising an additional dehumidifier (17) for dehumidifying gas.

8. A system (1) according claim 6 or 7, further comprising a valve (15) for controlling a gas flow route through the container (6), the first bypass circuit part (8c), and/or the second bypass circuit part (8d).

9. A system (1) according to any of the preceding claims, further comprising a processor (16) that is arranged for controlling the pump (9), the temperature conditioner (11), the humidifier (12), the gas inlet (13), the gas outlet (14) and/or the valve (15) for regulating the gas humidity, the gas temperature, the gas pressure, the gas composition, the gas flow rate and/or a gas flow route, based on measurement data obtained by sensor measurements.

10. A system (1) according to claim 9, wherein the processor is arranged for performing the controlling step based on measurement data that are exclusively obtained by a gas humidity sensor.

11. A system (1) according to any of the preceding claims, including a humidifier (12) for humidifying the gas, wherein the humidifier (12) is arranged in the gas transport circuit (8).

12. A system (1) according to any of the preceding claims, including a weighing sensor for weighing the dehumidifier (60).

13. A method (40) for treating seeds, comprising a step of drying seeds (2) by pumping a gas through a gas transport circuit (8) including a first part (8a) and a second part (8b), both parts interconnecting a chamber (3) provided with a seedbed (4) for supporting a layer (5) of the seeds, to a dehumidifier (60) for dehumidifying the gas, for subsequently transporting the gas via the chamber (3), the first circuit part (8a), the dehumidifier (60) and the second circuit part (8b) back to the chamber (3), wherein the dehumidifier (60) comprises a container (6) containing, during use, zeolite particles (7).

14. A method according to claim 13, further comprising a step of humidifying seeds (2) until a predefined humidity level is reached, wherein the humidifying step of performed prior to the drying step.

15. A method according to claim 14, wherein the step of humidifying the seeds includes the steps of:
providing a humidified gas; and
flowing the humidified gas through the chamber (3).

16. A method according to claim 13, 14 or 15, further comprising the steps of:
measuring the gas humidity, the gas temperature, the gas pressure, the gas composition and/or the gas flow rate;
regulating, based on data obtained by the measurements, a gas flow rate, the gas temperature, the gas humidity, the gas pressure, the gas composition and/or a gas flow route, by controlling a pump (9) for pumping the gas through the gas transport circuit (8), a temperature conditioner (11) for conditioning the temperature of the gas, a humidifier (12) for humidifying the gas, a gas inlet (13) for flowing a gas into the gas transport circuit (8), a gas outlet (14) for flowing the gas out of the gas transport circuit (8), and a valve (15) for controlling a gas flow route.

17. A computer program product for treating seeds, the computer program product comprising computer readable code for causing a processor to perform the steps of:
measuring the gas humidity, the gas temperature, the gas pressure, the gas composition and/or the gas flow rate;
regulating, based on data obtained by the measurement, a gas flow rate, the gas temperature , the gas humidity, the gas pressure, the gas composition and/or a gas flow route, by controlling a pump (9) for pumping the gas through the gas transport circuit (8), a temperature conditioner (11) for conditioning the temperature of the gas, a humidifier (12) for humidifying the gas, a gas inlet (13) for flowing a gas into the gas transport circuit (8), a gas outlet (14) for flowing the gas out of the gas transport circuit (8), and a valve (15) for controlling a gas flow route.
